Europäisches Patentamt

European Patent Office

Office européen des brevets

(19)

(11) Numéro de publication : **0 130 105 B1**

# (12) FASCICULE DE BREVET EUROPÉEN

(45) Date de publication du fascicule du brevet :
29.07.87

(21) Numéro de dépôt : 84401192.4

(22) Date de dépôt : 08.06.84

(51) Int. Cl.⁴ : **C 04 B 35/80**

(54) **Matière réfractaire composite renforcée de fibres réfractaires et son procédé de fabrication.**

(30) Priorité : 20.06.83 FR 8310160

(43) Date de publication de la demande :
02.01.85 Bulletin 85/01

(45) Mention de la délivrance du brevet :
29.07.87 Bulletin 87/31

(84) Etats contractants désignés :
BE CH DE GB IT LI NL SE

(56) Documents cités :
EP-A- 0 078 197
EP-A- 0 085 601
FR-A- 2 091 419
FR-A- 2 329 611
FR-A- 2 521 982
FR-A- 2 526 785
US-A- 4 252 588

(73) Titulaire : AEROSPATIALE Société Nationale Industrielle
37 boulevard de Montmorency
F-75781 Paris Cédex 16 (FR)

(72) Inventeur : Hordonneau, Alain
67 Villepreux Village
F-33160 Saint-Aubin-de-Medoc (FR)
Inventeur : Minjolle, Louis
10 rue Jeanne d'Albret
F-65000 Tarbes (FR)
Inventeur : Capdepuy, Bernard
6 rue des Ormeaux
F-33160 Saint-Medard-en-Jalles (FR)
Inventeur : Drouet, Claudette
27 rue des Palombes
F-65290 Juillan (FR)

(74) Mandataire : Bonnetat, Christian et al
Cabinet PROPI Conseils 23 rue de Léningrad
F-75008 Paris (FR)

EP 0 130 105 B1

# 0 130 105

**Description**

La présente invention concerne un procédé de fabrication d'une matière réfractaire comportant un réseau multidirectionnel de fibres réfractaires et une matrice réfractaire disposée dans les interstices dudit réseau, une telle matière étant destinée à présenter une résistance mécanique et thermique élevée, par exemple en vue de la réalisation de boucliers thermiques et de toutes pièces à usage thermomécanique.

On connaît déjà de nombreux modes de réalisation de matières réfractaires composites de ce type, généralement qualifiées de « céramiques ». Par exemple, dans les documents US-A-4 165-355 et US-A-4 209 560, on établit petit à petit, par étapes alternées, le réseau et la matrice réfractaires, respectivement à partir de fibres et de poudre céramique, puis on soumet l'ensemble à une pression à chaud, en vue de sa consolidation. Un tel procédé est long à mettre en œuvre, notamment à cause de la réalisation parcellaire du réseau. De plus, celui-ci présente par lui-même une faible cohésion, puisque les fibres en cours d'utilisation ne peuvent être liées aux fibres précédemment utilisées et déjà incorporées à la poudre céramique.

Aussi, pour remédier à ces inconvénients, on a déjà proposé de réaliser, par tissage, et indépendamment de la réalisation de la matrice, ledit réseau de fibres réfractaires, puis d'imprégner ledit réseau tissé d'un bain liquide ou visqueux d'une matière réfractaire, ledit réseau ainsi imprégné étant soumis à un traitement thermique de séchage et de consolidation de la matière réfractaire du bain. La mise en œuvre d'un processus de ce type soulève cependant des difficultés en ce qui concerne la compacité de la matière composite obtenue. En effet, sous peine de détériorer le réseau tissé de fibres réfractaires, il est impossible de soumettre cette matière composite à compression après imprégnation. Aussi, est-il très important d'emplir, aussi complètement que possible, les interstices dudit réseau tissé au moment de l'imprégnation.

Pour ce faire, les documents US-A-3 904-464, US-A-4 001 478 et US-A-4 038 440 proposent de faire agir sur le bain d'imprégnation une pression et une aspiration combinées, au moment de l'imprégnation. Un tel processus est souvent malaisé à mettre en œuvre. Par suite, il est préférable, comme proposé dans le document US-A-4 278 729, d'effectuer une pluralité d'imprégnations successives, chacune suivie d'un traitement thermique de séchage et de consolidation.

Cependant, cette méthode d'imprégnations et de traitements thermiques multiples alternés, n'est pas non plus sans défaut.

En effet, les interstices sont très hétérogènes en dimensions (les lacunes entre les fils ou les mèches de fils de tissage correspondent à de gros pores, alors que le jeu entre les fibres élémentaires constituant les fils ou les mèches constituent des pores fins) de sorte qu'il est impossible de les boucher aussi bien les uns que les autres avec le bain d'imprégnation. Il en résulte donc que la porosité de la matière composite réfractaire reste importante, et, en tout cas, très largement supérieure à 30 % en volume.

Par ailleurs, le document FR-A-2 091 419 décrit un procédé de fabrication d'objets métalliques comportant un revêtement de zircone fibreuse. Selon ce procédé, pour obtenir ledit revêtement, on commence par réaliser un réseau plan de fibres de zircone et on imprègne ce réseau par un ciment à la zircone formé par un liquide contenant un composé de zirconium en solution et une poudre réfractaire et, éventuellement, on procède à une ou plusieurs imprégnations complémentaires à l'aide d'un liquide contenant seulement un composé de zirconium en solution. La ou les imprégnation(s) complémentaire(s) sont réalisées par la mise en œuvre d'un vide.

On remarquera que, bien que le procédé du document FR-A-2 091 419 ne concerne que les revêtements minces de zircone fibreuse, sa mise en œuvre nécessite l'application d'un vide.

La présente invention a pour objet de remédier aux inconvénients des procédés décrits ci-dessus et de permettre d'obtenir des matières composites épaisses du type rappelé ci-dessus, à très faible porosité et donc de grandes qualités mécaniques et thermiques, sans application de vide ou analogue.

A cette fin, selon l'invention, le procédé pour la réalisation d'une matière réfractaire composite comportant un réseau tissé de fibres réfractaires et une matrice réfractaire enrobant ledit réseau, procédé selon lequel on imprègne ledit réseau, préalablement fabriqué, par un bain fluide d'une poudre réfractaire, puis par une composition fluide d'une substance convertible, sous l'action d'un traitement thermique, en une matière réfractaire, ledit réseau tissé étant soumis à un traitement thermique de séchage et de consolidation après chaque imprégnation, est caractérisé en ce que, ledit réseau tissé étant multidirectionnel, ledit bain fluide est une suspension de la poudre réfractaire dans un liquide totalement éliminable par le traitement thermique suivant l'imprégnation correspondante, et en ce que l'on répète au moins l'un des deux types d'opérations d'imprégnation jusqu'à obtenir une matière réfractaire composite dont le taux de porosité en volume est au plus égal à 30 %.

Ainsi, la suspension de poudre céramique permet le remplissage rapide des pores les plus gros du réseau au moyen de particules céramiques de dimensions relativement importantes, tandis que la composition fluide permet d'engendrer des particules céramiques fines qui pénètrent dans des pores du réseau beaucoup plus petits et les bouchent. On obtient alors sans application de pression, une matière céramique particulièrement compacte.

On profite ainsi de granulométrie étalée pour améliorer les taux de remplissage (grosses particules

2

en matière céramique, petites particules obtenues par la composition fluide).

De plus, il est possible de cette manière d'employer des matériaux de remplissage différents, entre la poudre céramique à gros grains et la composition fluide à grains fins, de façon à modifier à la demande les propriétés du composite (coefficient de dilatation, module d'élasticité, densité, réfractairité, réactivité chimique, etc...).

Ce procédé conduit au total à un nombre limité de traitements, ce qui contribue à l'obtention d'un prix de revient réduit.

Sans que cela puisse être préjudiciable à la présente invention, la Demanderesse avance ci-après une hypothèse d'explication concernant l'obligation d'utiliser le vide dans le procédé du brevet FR-A-2 091 419.

Dans ce procédé antérieur connu, le liquide du ciment à la zircone contient un composé de zirconium. Ainsi, lors de la première imprégnation du réseau plan, non seulement les grains de la poudre de zirconium bouchent les pores les plus gros (ce qui est recherché), mais encore la zircone provenant de la conversion du composé de zirconium forme une sorte de croûte externe obturant superficiellement et au moins partiellement, les pores intérieurs les plus fins. Ensuite, pour faire pénétrer le seul liquide du ciment de zircone à l'intérieur de ces pores intérieurs, il est nécessaire d'appliquer un vide.

En revanche, dans le procédé selon l'invention, le liquide de la suspension de poudre réfractaire est, par exemple, de l'eau, éventuellement additionnée de faibles quantités d'alcool polyvinylique et de défloculant. Par suite, lors du traitement thermique de séchage suivant l'imprégnation (à environ 80 °C), ledit liquide est éliminé, sans obstruer les pores. Plusieurs imprégnations successives peuvent alors être efficaces, car le liquide de celles-ci peut largement pénétrer à l'intérieur desdits pores.

Ces imprégnations successives remplacent alors la mise en œuvre d'un vide et permettent l'obtention d'une matière céramique dense, quoique celle-ci soit obtenue à partir d'un réseau de fibres multidirectionnel et non plus à partir d'un réseau de fibres plan.

De préférence, les fibres du réseau tissé sont choisies parmi celles réalisées en carbure de silicium, en alumine, en nitrure de silicium, en zircone, en silice, en un aluminosilicate ou en un mélange carbure de silicium-nitrure de silicium.

Pour la mise en œuvre de l'invention, on commence par tisser à l'aide d'une machine de tissage spéciale de type connu, un réseau tridimensionnel de fils de fibres par exemple en carbure de silicium de la qualité « Nicalon » (marque déposée) vendue par la Société MITSUI. Le tissage peut avoir les particularités suivantes :

| Direction | Pas | Nombre de fils | Répartition Volumique |
|-----------|------|----------------|-----------------------|
| X | 3mm | 4 | 30% |
| Y | 3mm | 4 | 30% |
| Z | 0,8mm | 18 | 40% |

Le coefficient de remplissage de la structure est de 45 % et sa masse spécifique de 1,16 g/cm³.

D'une manière générale, on cherche à obtenir un réseau tissé dans lequel le volume des fibres représente de 40 à 55 %.

La suspension de poudre céramique destinée à l'imprégnation du réseau peut être réalisée dans de l'eau contenant, outre la poudre céramique, un agent défloculant et un alcool polyvinylique pour faciliter la consolidation après séchage. Les pourcentages en poids des différents constituants peuvent être les suivants :

| | |
|---|---|
| eau | de 20 à 60 % |
| poudre céramique | de 40 à 80 % |
| agent défloculant | de 0 à 5 % |
| alcool polyvinylique | de 0 à 5 % |

La solution a un pH supérieur à 7 pour augmenter la stabilité de la suspension.

De préférence, la poudre céramique est choisie dans le groupe formé par l'alumine, la zircone, le carbure de silicium, la magnésie, le nitrure de silicium, la silice, le titanate d'aluminium, le nitrure de bore et le borure de titane. On peut mélanger deux ou plusieurs poudres céramiques entre elles dans la suspension.

Par ailleurs, la composition fluide peut être constituée par un sel, un gel, une solution ou un composé organo-métallique d'une matière donnant après traitement thermique des composés identiques aux poudres céramiques utilisées pour la suspension. Pour la réalisation de la composition fluide, on peut mélanger des sels, des gels, des composés organo-métalliques ou des solutions de matières décomposables, à condition que ces mélanges donnent, après traitements thermiques, des composés identiques aux poudres céramiques utilisées pour la suspension.

Dans un mode de mise en œuvre préféré du procédé selon l'invention, la composition volumique de la matière réfractaire composite est la suivante :

| | |
|---|---|
| fibres réfractaires | de 40 à 55 % |
| matrice | de 25 à 60 % |
| porosité | au plus égale à 30 % |

Bien entendu, la porosité est fonction du nombre de traitements d'imprégnation imposés au réseau tissé.

On donne ci-après quelques exemples de mise en œuvre.

### Exemple I

Le substrat, tissé de la façon indiquée ci-dessus, est d'abord imprégné à l'aide d'une barbotine d'alumine alpha (alumine A 16 — marque déposée de la Société Alcoa) en suspension dans de l'eau additionnée de 0,05 % d'alcool polyvinylique (Rhodoviol — marque déposée) et de 1 % de défloculant basique (Darwan C — marque déposée). Après imprégnation, on sèche à 80 °C et l'on traite à 800 °C (15 minutes) pour consolider l'alumine alpha. Une deuxième imprégnation est ensuite effectuée à l'aide d'un gel d'alumine, puis le substrat imprégné est déshydraté par chauffage à 80 °C pendant 15 heures, puis traité à 800 °C pendant 15 minutes.

Les opérations d'imprégnation et de traitement thermique sont répétées deux ou trois fois, jusqu'à ce que l'on obtienne un matériau de masse spécifique d'au moins environ 2,5 g/cm³, correspondant à une porosité d'environ 30 %. On peut également répéter plusieurs autres fois ces opérations, jusqu'à obtenir un matériau de porosité encore plus faible.

### Exemple II

On utilise le même substrat tissé que dans l'exemple I et on le traite successivement :

a) à l'aide d'une barbotine de zircone (Zircoa C — marque déposée — de particules passant au tamis ASTM 325) en suspension dans l'eau additionnée de 0,5 % de Rhodoviol (marque déposée) et de 1 % de défloculant Darwan C (marque déposée), qu'on sèche à 80 °C, puis qu'on traite thermiquement,

b) puis d'une solution d'acétate de zirconyle.

### Exemple III

On utilise de la magnésie électro-fondue, puis du chlorure de magnésium.

### Exemple IV

Les matériaux sont de natures différentes. Le premier remplissage est obtenu à l'aide de carbure de silicium, le second avec du chlorure d'aluminium.

Il convient de noter que l'on peut associer successivement à une poudre céramique, plusieurs composés décomposables différents (par exemple de l'acétate de zirconyle, puis du chlorure d'aluminium).

Dans les exemples II, III et IV, on applique les mêmes traitements thermiques que dans l'exemple I et les opérations d'imprégnation et de traitement thermique sont répétées également plusieurs fois jusqu'à obtention de la masse spécifique désirée.

L'invention s'applique particulièrement à la fabrication de pièces en céramique pour usage à températures élevées, de 400 °C à 1 800 °C, notamment de pièces de moteurs Diesel ou de turbopropulseurs.

**Revendications**

1. Procédé pour la réalisation d'une matière réfractaire composite comportant un réseau tissé de fibres réfractaires et une matrice réfractaire enrobant ledit réseau, procédé selon lequel on imprègne ledit réseau, préalablement fabriqué, par un bain fluide d'une poudre réfractaire, puis par une composition fluide d'une substance convertible, sous l'action d'un traitement thermique, en une matière réfractaire, ledit réseau tissé étant soumis à un traitement thermique de séchage et de consolidation après chaque imprégnation, caractérisé en ce que, ledit réseau tissé étant multidirectionnel, ledit bain fluide est une suspension de la poudre réfractaire dans un liquide totalement éliminable par le traitement thermique suivant l'imprégnation correspondante, et en ce que l'on répète au moins l'un des deux types d'opérations d'imprégnation jusqu'à obtenir une matière réfractaire composite dont le taux de porosité en volume est au plus égal à 30 %.

2. Procédé pour la réalisation d'une matière réfractaire composite selon la revendication 1, caractérisé en ce que les fibres du réseau tissé sont choisies parmi celles réalisées en carbure de silicium, en alumine, en nitrure de silicium, en zircone, en silice, en un aluminosilicate ou en un mélange carbure de silicium-nitrure de silicium.

3. Procédé pour la réalisation d'une manière réfractaire composite selon l'une des revendications 1 ou 2, caractérisé en ce que la poudre céramique de la suspension est choisie dans le groupe formé par l'alumine, la zircone, le carbure de silicium, la magnésie, le nitrure de silicium, la silice, le titanate d'aluminium, le nitrure de bore et le borure de titane.

4. Procédé pour la réalisation d'une matière réfractaire composite selon la revendication 3, caractérisé en ce que, dans la suspension, on mélange au moins deux poudres céramiques.

5. Procédé pour la réalisation d'une matière réfractaire composite selon l'une quelconque des revendications 1 à 4, caractérisé en ce que la composition fluide est un sel, un gel, une solution ou un composé organo-métallique d'une matière donnant après traitement thermique des composés identiques aux poudres céramiques utilisées pour la suspension.

6. Procédé pour la réalisation d'une matière réfractaire composite selon l'une quelconque des revendications 1 à 5, caractérisé en ce que la composition fluide est obtenue par mélange de sels, de gels, de composés organo-métalliques ou de solutions de matières décomposables.

7. Procédé selon l'une quelconque des revendications 1 à 6, caractérisé en ce que la composition volumique de la matière réfractaire composite est la suivante :

| | |
|---|---|
| fibres réfractaires | de 40 à 55 % |
| matrice | de 25 à 60 % |
| porosité | au plus égale à 30 % |

## Claims

1. Method for making a refractory composite comprising a network woven from refractory fibers and a refractory matrix coating said network, method comprising impregnating said network, previously made, with a fluid baht of a refractory powder and then with a fluid composition of a substance convertible, under the action of a heat treatment, into a refractory matter, said woven network being subjected to a heat treatment for drying and consolidation after each impregnation, characterized in that, said woven network being multidirectional, said fluid bath is a suspension of the refractory powder in a liquid can be totally eliminated by the heat treatment following the corresponding impregnation, and in that at least one of the two types of impregnation operations is repeated until a refractory composite is obtained whose rate of porosity by volume is at the most equal to 30 %.

2. Method for making a refractory composite according to claim 1, characterized in that the fibers of the woven network are selected from those made of silicon carbide, alumina, silicon nitride, zirconia, silica, an aluminosilicate or a silicon carbide/silicon mixture.

3. Method for making a refractory composite according to claim 1 or claim 2, characterized in that the ceramic powder of the suspension is selected from the group formed by alumina, zirconia, silicon carbide, magnesia, silicon nitride, silica, aluminium titanate, boron nitride and titanium boride.

4. Method for making a refractory composite according to claim 3, characterized in that at least two ceramic powders are mixed in the suspension.

5. Method for making a refractory composite according to any are of claims 1 to 4, characterized in that the fluid composition is a salt, a gel, a solution or an organo-metallic compound of a matter yielding after heat treatment compounds identical to the ceramic powders used for the suspension.

6. Method for making a refractory composite according to any one of claims 1 to 5, characterized in that the fluid composition is obtained by mixing salts, gels, organo-metallic compounds or solutions of decomposable matters.

7. Method for making a refractory composite according to any one of claims 1 to 6, characterized in that the composition by volume of the refractory composite is as follows :

| | |
|---|---|
| refractory fibers | from 40 to 55 % |
| matrix | from 25 to 60 % |
| porosity | at the most equal to 30 % |

## Patentansprüche

1. Verfahren zum Herstellen eines feuerfesten Verbundstoffes bestehend aus einem Gewebenetz feuerfester Fasern und einer das Netz umgebenden feuerfesten Matrix, wobei das vorgefertigte Netz durch ein Fluidbad mit einem feuerfesten Pulver und danach durch eine Fluid-Zusammensetzung mit einem unter der Wirkung einer Wärmebehandlung zu einem feuerfesten Stoff umwandlunsgfähigen Substanz imprägniert wird und wobei das Gewebenetz nach jeder Imprägnierung einer trocknenden und verfestigenden Wärmebehandlung ausgesetzt wird, dadurch gekennzeichnet, daß das Gewebenetz multidirektional ist, daß das Fluidbad eine Suspension des feuerfesten Pulvers in einer durch die Wärmebehandlung nach der entsprechenden Imprägnierung völlig beseitigbaren Flüssigkeit ist und daß zumindest eine der beiden Imprägnierausführungsarten wiederholt wird, bis sich ein feuerfester Verbundstoff ergibt, dessen Volumen-Porositätsverhältnis höchstenfalls gleich 30 % ist.

2. Verfahren nach Anspruch 1, dadurch gekennzeichnet, daß als Fasern des Gewebenetzes solche Fasern gewählt werden, die aus Siliziumcarbid, Aluminiumoxid, Siliziumnitrid, Zirkon, Siliziumoxid, Aluminiumsilikat oder aus einer Siliziumcarbid/Siliziumnitrid-Mischung bestehen.

3. Verfahren nach einem der vorhergehenden Ansprüche 1 oder 2, dadurch gekennzeichnet, daß das verwendete Keramikpulver gewählt wird aus der Gruppe Aluminiumoxid, Zirkon, Siliziumcarbid, Magnesiumoxid, Siliziumnitrid, Siliziumoxid, Aluminiumtitanat, Bornitrid und Titanborid.

4. Verfahren nach Anspruch 3, dadurch gekennzeichnet, daß der Suspension zumindest zwei Keramikpulver beigemengt werden.

5. Verfahren nach einem der vorhergenenden Ansprüche 1 bis 4, dadurch gekennzeichnet, daß als Fluidzusammensetzung ein Salz, ein Gel, eine Lösung oder eine metallorganische Verbindung eines Stoffes verwendet werden, der nach der Wärmebehandlung mit den für die Suspension benutzten Keramikpulvern identische Verbindungen ergibt.

6. Verfahren nach einem der vorhergehenden Ansprüche 1 bis 5, dadurch gekennzeichnet, daß die Fluid-Zusammensetzung durch Vermischen der Salze, Gele, metallorganischen Verbindungen oder der aus zerlegbaren Stoffen bestehenden Lösungen gewonnen wird.

7. Verfahren nach einem der vorhergehenden Ansprüche 1 bis 6, dadurch gekennzeichnet, daß die Volumen-Zusammensetzung des feuerfesten Verbundstoffes wie folgt ist :

| | |
|---|---|
| feuerfeste Fasern | von 40 bis 55 % |
| Grundmasse (Matrix) | von 25 bis 60 % |
| Porosität | höchstenfalls gleich 30 % |